Europäisches Patentamt

European Patent Office

Office européen des brevets

(19)

(11) **EP 1 630 525 A2**

(12) **EUROPÄISCHE PATENTANMELDUNG**

(43) Veröffentlichungstag:
 **01.03.2006 Patentblatt 2006/09**

(51) Int Cl.:
 *G01C 25/00* (2006.01)   *G01C 19/00* (2006.01)

(21) Anmeldenummer: 05106723.9

(22) Anmeldetag: **21.07.2005**

(84) Benannte Vertragsstaaten:
 **AT BE BG CH CY CZ DE DK EE ES FI FR GB GR HU IE IS IT LI LT LU LV MC NL PL PT RO SE SI SK TR**
 Benannte Erstreckungsstaaten:
 **AL BA HR MK YU**

(30) Priorität: **27.08.2004 DE 102004041512**

(71) Anmelder: **Robert Bosch GmbH**
 **70442 Stuttgart (DE)**

(72) Erfinder: **Vogel, Andreas**
 **31141, Hildesheim (DE)**

(54) **Verfahren zur Kalibrierung eines Gyroskops in einem Ortungsmodul in einem beweglichen System**

(57)   Um ein Verfahren zur Kalibrierung eines Gyroskops in einem Ortungsmodul in einem beweglichen System, insbesondere in einem Kraftfahrzeug anzugeben, bei welchem nur die passenden Messungen der absoluten Position des Kraftfahrzeugs berücksichtigt werden, werden folgende Schritte ausgeführt:

- eine Historie mit Datensätzen, welche die gemessenen Bewegungsrichtungen $H(t_n)$ einschließlich ihrer geschätzten Fehler und die Messwerte $U(t_n)$ des Gyroskops zu einer Reihe von Zeitpunkten $t_n$ umfassen, wird angelegt,

- zu einem wählbaren Zeitpunkt $t_k$ wird ein zweiter, weiter zurückliegender Zeitpunkt $t_{k'}$ bestimmt,
- die mittlere Drehrate $\overline{\omega}(t_k)$ im Zeitintervall $(t_k - t_{k'})$ wird aus der Änderung der Bewegungsrichtungen bestimmt und
- die bestimmte mittlere Drehrate wird zur Berechnung der Kalibrierparameter des Gyroskops benutzt, wobei die Berechnung der Kalibrierparameter entweder direkt oder durch die Aktualisierung eines Filters, insbesondere eines Kalman-Filters, erfolgt.

Fig.1

EP 1 630 525 A2

**Beschreibung**

Technisches Gebiet

Die Erfindung betrifft ein Verfahren zur Kalibrierung eines Gyroskops in einem Ortungsmodul in einem beweglichen System gemäß dem Oberbegriff des Anspruchs 1.

Stand der Technik

Um die räumliche Bewegung eines Kraftfahrzeuges zu erfassen, werden inertiale Messsysteme benutzt, welche aus einer Reihe von Drehratensensoren und Beschleunigungssensoren bestehen. Für eine vollständige Beschreibung des Bewegungszustandes des Kraftfahrzeuges werden dabei jeweils drei rechtwinklig zueinander angeordnete Sensoren beider Typen benötigt. Die zur Messung der Drehrate eingesetzten Gyroskope liegen in verschiedenen Ausführungsformen vor. Die meisten Gyroskop-Typen nutzen den Einfluss des Corioliseffekts auf schwingende Masse behaftete Strukturen aus. So wird typischerweise eine Schwingungsmode in x-Richtung aufrecht erhalten. Wenn eine Drehung um die vertikale Achse des Kraftfahrzeuges stattfindet, so wirkt eine Corioliskraft in Richtung der y-Achse, welche eine Sekundärschwingungsmode anregt, welche proportional zur Winkelgeschwindigkeit der Drehung ist. Die Amplitude der Sekundärschwingung wird in eine Ausgangsspannung übersetzt. Der dabei relevante Proportionalitätsfaktor ist von vielen Parametern, wie zum Beispiel der Temperatur, abhängig und muss zur Skalierung des Gyroskops bestimmt werden. Obwohl die Messvorrichtung prinzipiell inversionssymmetrisch ist, liegt zusätzlich ein konstanter Term vor, also eine Offset-Spannung, welche gemessen wird, wenn die relevante Winkelgeschwindigkeit verschwindet. Diese kommen durch hier nicht weiter analysierte, nicht lineare Effekte in dem Sensor zustande. Auch der Offset ist temperaturabhängig.

Spezielle Bauarten von Gyroskopen sind das Stimmgabelgyroskop und das Vibrationsgyroskop. Beim Stimmgabelgyroskop werden die zwei Arme des Gyroskops, welche nebeneinander wie bei einer Stimmgabel angeordnet sind und vorzugsweise aus einem piezoelektrischen Material bestehen, durch Treiberelektroden zu einer Schwingung angeregt. Die dazu orthogonale, zur Winkelgeschwindigkeit proportionale Schwingungsmode wird von Detektionselektroden erfasst und in ein elektrisches Signal umgewandelt.

Die DE 196 53 577 beschreibt ein Stimmgabelgyroskop, bei welchem temperaturabhängige Änderungen des Ausgangssignals korrigiert werden.

Aus der DE 199 02 339 ist eine Messvorrichtung bekannt, bei welcher das elektrische Rauschen des Ausgangssignals minimiert wird.

Bei Vibrationsgyroskopen wird aus einer seismischen Masse und einer Gegenelektrode ein elektrisches Kondensatorsystem ausgebildet. Wieder wird eine Schwingungsmode der seismischen Masse erzeugt. Durch das Auftreten einer Drehung wird die seismische Masse senkrecht zur Schwingungsmode ausgelenkt, und deren Lageänderung modifiziert die elektrische Kapazität des Systems, was die gemessene Ausgangsspannung verändert.

Die DE 198 32 906 beschreibt die Ausgestaltung eines solchen Systems mit einer möglichst guten Temperaturkompensation.

Aus dem Stand der Technik ist außerdem bekannt, ein Ortungsmodul in einem Kraftfahrzeug mit einem GPS-Empfänger als absoluten Sensor und gleichzeitig mit den oben genannten Inertial-Sensoren auszustatten. Beide Komponenten ergänzen sich dabei. GPS-Signale können momentan abgeschattet sein, wie zum Beispiel bei der Durchfahrt durch einen Tunnel. Außerdem liegen in manchen Augenblicken aufgrund der Geometrie nur eine begrenzte Anzahl von Satelliten im Blickfeld des GPS-Sensors, was die Genauigkeit des Signals herabsetzt. Schließlich sind unter Umständen mehrere Sekunden für die Berechnung der aktualisierten Position des Kraftfahrzeuges erforderlich. Deshalb ist die Fähigkeit von GPS, die genaue Position eines Kraftfahrzeuges zu verfolgen, streng begrenzt, insbesondere durch eine stetige, zeitliche Verzögerung. Da die oben genannten inertialen Messsysteme von externen Signalgebern unabhängig sind, kommt es zu kleineren Variationen in ihrer Genauigkeit und zu einer sehr schnellen Aktualisierung der berechneten Position des Fahrzeuges. Aus dem gleichen Grunde jedoch addieren sich die Abschätzungsfehler der bestimmten Position, so dass die berechnete Position nach einer gewissen Zeitspanne außerhalb der typischen GPS-Genauigkeit liegt. GPS und inertiale Messsysteme können miteinander kombiniert werden, um die Vorteile der Genauigkeit der Positionsbestimmung nach GPS und die schnelle Aktualisierungsfähigkeit der inertialen Messsysteme auszunutzen.

Die Kombination der beiden Systeme wird auch zur Kalibrierung des Gyroskops herangezogen. Dabei werden die Kalibrierparameter des Gyroskops im Rahmen eines Filterprozesses durch Hinzuziehen von Informationen von einem GPS-Sensor oder von einem anderen absoluten Positionssensor bestimmt. Wenn eine digitale Straßenkarte vorhanden ist, kann die absolute Position des Kraftfahrzeugs besonders genau bestimmt werden, da der Straßenverlauf in diesem Fall bekannt ist. Üblicherweise werden die Sensoren kalibriert, indem die Kalibrierparameter dem Systemvektor hinzugefügt und die Systemgleichung entsprechend erweitert werden. Um eine Kombination der Informationen dieser völlig unterschiedlichen Sensoren miteinander zu erreichen, wird oft ein Kalman-Filter eingesetzt. Dieses adaptive Filter ist trotz seiner mathematischen Simplizität sehr leistungsstark. Innerhalb des Filterprozesses kann das langsame aber absolut messende GPS-Signal mit den Signalen des inertialen Messsystems kombiniert werden, um eine schnelle und genaue Positionsbestimmung durchzuführen. Alternativ kann für jeden kalibrierenden Sensor ein eigenes Filter benutzt werden, wodurch die Systemvektoren kleiner und der numerische Aufwand geringer werden. Bei der Implementierung des Kalman-Filters werden zwei Phasen vorgesehen, nämlich die Schätzung des neuen Zustandes des Systems, bevor die Sensorwerte einfließen, und anschließend die Korrektur durch die aktuellen Messwerte. Messungen werden in regelmäßigen Zeitintervallen vorgenommen.

Ein Nachteil bei einem solchen Vorgehen ist, dass in regelmäßigen Zeitintervallen, unabhängig von der Fahrsituation, Informationen bezüglich der absoluten Position des Kraftfahrzeugs in die Rechnung einfließen. Für die Kalibrierung des Gyroskops ist es jedoch sinnvoller, wie im Ausführungsbeispiel genauer beschrieben, bevorzugt Zeitpunkte zu betrachten, in denen Extrema der Bewegungsrichtungen, also maximale Orientierungen, vorliegen, da dann Informationen vom absoluten Sensor einerseits und vom Gyroskop andererseits am ehesten miteinander in Beziehung gesetzt werden können.

Darstellung der Erfindung, Aufgabe, Lösung, Vorteile

Aufgabe der Erfindung ist es, ein Verfahren zur Kalibrierung eines Gyroskops in einem Ortungsmodul in einem beweglichen System, welches nur die passenden Messungen der absoluten Position des Kraftfahrzeugs berücksichtigt, bereitzustellen, welches die anderen aber verwirft.

Erfindungsgemäß wird diese Aufgabe mittels eines Verfahrens mit den im Anspruch 1 genannten Merkmalen gelöst. Dadurch, dass

- eine Historie mit Datensätzen, welche die gemessenen Bewegungsrichtungen $H(t_n)$ einschließlich ihrer geschätzten Fehler und die Messwerte $U(t_n)$ des Gyroskops zu einer Reihe von Zeitpunkten $t_n$ umfassen, angelegt wird,

- zu einem wählbaren Zeitpunkt $t_k$ ein zweiter, weiter zurückliegender Zeitpunkt $t_{k'}$ bestimmt wird,

- die mittlere Drehrate $\overline{\omega}\,(t_k)$ im Zeitintervall $(t_k - t_{k'})$ aus der Änderung der Bewegungsrichtungen bestimmt wird und

- die bestimmte mittlere Drehrate zur Berechnung der Kalibrierparameter des Gyroskops benutzt wird, wobei die Berechnung der Kalibrierparameter entweder direkt oder durch die Aktualisierung eines Filters, insbesondere eines Kalman-Filters, erfolgt,
  wird es möglich, diejenigen Informationen des absoluten Sensors zu selektieren, welche für eine Kalibrierung des Gyroskops am geeignetsten sind.

In einer bevorzugten Ausgestaltung der Erfindung ist vorgesehen, dass nur Zeitpunkte $t_k$ und $t_{k'}$ berücksichtigt werden, in denen der geschätzte Fehler der Bewegungsrichtungen unterhalb eines bestimmten Wertes liegt. Dadurch wird erreicht, dass nur Datensätze für die Berechnung der Kalibirierparameter des Gyroskops benutzt werden, welche verlässlich sind. Insbesondere in Kurven werden oft die Messwerte der Bewegungsrichtungen nicht die notwendige Qualität aufweisen und daher ignoriert werden.

Weiter bevorzugt ist, dass ein Datensatz, welcher zu einem zweiten Zeitpunkt $t_{k'}$ gehört, nach seiner Benutzung zur Berechung der Kalibrierparameter in der Historie als benutzt gekennzeichnet wird. Dadurch wird sichergestellt, dass ein Datensatz nicht mehrfach bei der Aktualisierung des Filters wiederverwendet wird, wodurch die Vorteile, die auf der Linearität des Filters beruhen, nicht ausreichend zum Tragen kommen würden.

In einer weiteren bevorzugten Ausgestaltung der Erfindung ist vorgesehen, dass der zweite, weiter zurückliegende Zeitpunkt $t_{k'}$ bestimmt wird derart, dass die Differenz $H(t_k) - H(t_{k'})$ der zu den Zeitpunkten $t_k$ und $t_{k'}$ gemessenen Bewegungsrichtungen maximal ist. Damit wird erreicht, dass die Skalierungskonstante des Gyroskops gut abgeschätzt werden kann.

Weiterhin ist bevorzugt, dass Daten, die zu einem Zeitpunkt gehören, welcher eine bestimmte Zeitlänge zurückliegt, aus der Historie gelöscht werden. Dies vermeidet eine unnötig große Speicherplatzbelegung mit Daten, die nicht geeignet ausgewertet werden können, da die Kalibrierungsparameter nur in kurzen Zeiträumen als Konstanten angesehen werden können. Außerdem bewegt sich das Kraftfahrzeug über lange Zeiträume gemittelt in einer gegebenen Richtung, da der Fahrer eine direkte Verbindung zum Ziel anstrebt und die Abweichungen davon gewissermaßen durch die Straßenführung aufgezwungen werden. Die mittlere Drehrate des Fahrzeugs ist somit vernachlässigbar , so dass der Skalierfaktor des Gyroskops schlecht zu beobachten ist.

Weitere bevorzugte Ausgestaltungen der Erfindung ergeben sich aus den in den Unteransprüchen genannten Merkmalen.

Kurze Beschreibung der Zeichnungen

Die Erfindung wird nachfolgend in einem Ausführungsbeispiel anhand der zugehörigen Zeichnungen näher erläutert. Es zeigen:

Figur 1 eine schematische Darstellung verschiedener Fahrzeugpositionen beim Durchfahren einer Straßenkurve;

Figur 2 eine schematische Darstellung der gemessenen Bewegungsrichtungen, welche den verschiedenen Fahrzeugpositionen entsprechen und

Figur 3 schematisch das Ausgangssignal des Gyroskops beim Durchfahren der Straßenkurve.

Bester Weg zur Ausführung der Erfindung

Zur Berechnung der Kalibrierparameter des Fahrzeugs wird ein unten näher beschriebener Kalmanfilter benutzt. Dabei wird ein Filterschritt immer dann ausgeführt, wenn das Fahrzeug entweder stillsteht oder die Messungen der Bewegungsrichtung verlässlich sind. Dies ist der Fall, wenn die momentane Beschleunigung und Drehrate des Fahrzeugs klein sind sowie eine gute Sichtbarkeit der GPS-Satelliten vorliegt.

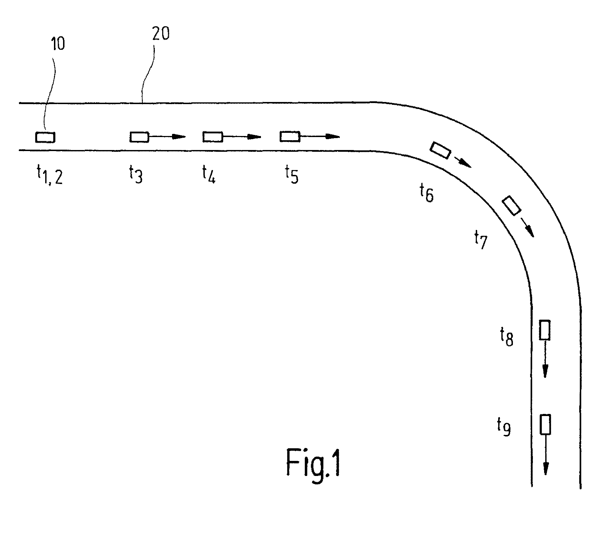

In Figur 1 sind die Positionen eines Fahrzeuges 10 in verschiedenen Zeitpunkten $t_n$ auf einer Straße 20 verzeichnet. Im Anfangszustand ($t_1$ und $t_2$) ist das Fahrzeug 10 stationär.

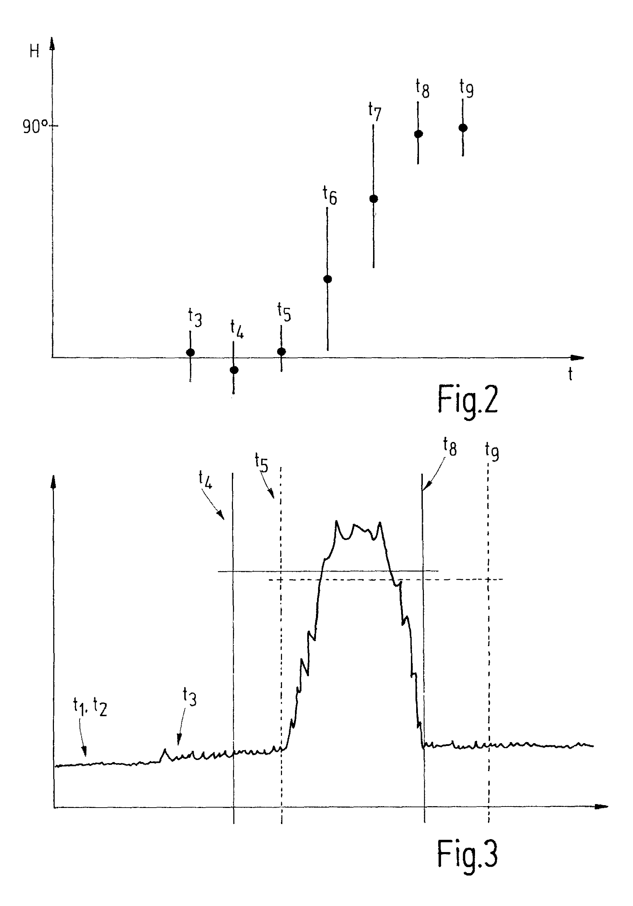

Das in Figur 3 dargestellte Ausgangssignal des Gyroskops ist in diesem Zeitraum ungefähr konstant. Das Rauschen ist relativ gering, da von Geschwindigkeit und Beschleunigungen abhängige Vibrationen des Fahrzeuges nicht vorliegen. Der Offset des Gyroskops, also die Ausgangsspannung bei verschwindender Winkelgeschwindigkeit, kann bei Stillstand durch einfache Mittelwertbildung errechnet werden.

Das Fahrzeug setzt sich nun in Bewegung und durchfährt die in Figur 1 dargestellte Kurve. Dabei ist typischerweise die Geschwindigkeit des Fahrzeuges vor und nach der Kurve größer als in der Kurve selbst. Dadurch sind die Messungen der Bewegungsrichtung vor und nach der Kurve mit einem kleineren Fehler behaftet als innerhalb der Kurve (vergleiche Figur 2). Vor und nach der Kurve verschwindet die Winkelgeschwindigkeit und das in Figur 3 dargestellte Ausgangssignal entspricht dem Offset, nun allerdings mit einem Rauschen, welches größer ist als beim Stillstand des Fahrzeuges. Innerhalb der Kurve ist die Winkelgeschwindigkeit ungefähr konstant, wodurch die Ausgangsspannung des Gyroskops in Figur 2 auf einen konstanten Wert ansteigt.

In der Kurve, also zu den Zeitpunkten $t_6$ und $t_7$ wird keine Aktualisierung des Filters vorgenommen, da die Drehrate zu hoch ist und somit die Bewegungsrichtung mit einem zu großen Fehler behaftet ist. Dennoch werden die Messwerte, insbesondere die des Gyroskops in die Historie eingetragen.

Nach dem Durchfahren der Kurve, also zum Zeitpunkt $t_8$, ist die Messung der Bewegungsrichtung verlässlich genug, um einen Filterschritt vorzunehmen. Dazu wird in der Historie nach den Zeitpunkten gesucht, in denen sich die Bewegungsrichtung von der aktuellen Bewegungsrichtung besonders stark unterschied. Hier ergibt sich das Maximum der Drehung bei $t_4$. Der Zeitpunkt $t_4$ wird nun in der Historie z. B. durch das Setzen eines Flags gekennzeichnet, um zu verhindern, dass der dazu gehörige Datensatz ein weiteres Mal benutzt wird. Aus Figur 2 lässt sich leicht die mittlere Drehrate, die diesem Zeitraum entspricht, ermitteln. Entsprechend kann der mittlere Messwert in Figur 3 einfach berechnet werden (durchgezogene horizontale Linie). Durch Vergleich der entsprechenden Größen, oder durch die Anwendung des Kalman-Filters, können nun die Kalibrierwerte ermittelt werden.

Die nächste Aktualisierung des Filters geschieht zum Zeitpunkt $t_9$. Wieder wird nach dem Datensatz in der Historie gesucht, welcher die Differenz der gemessenen Bewegungsrichtungen maximiert. In diesem Fall wird der Zeitpunkt $t_5$ ausgewählt, da $t_4$ nicht mehr zur Verfügung steht. Die mittlere Ausgangsspannung, welche berechnet wird, entspricht der gestrichelten horizontalen Linie in Fig. 3.

Kurz nach der Kurve werden durch das beschriebene Vorgehen automatisch diejenigen Werte der Bewegungsrichtung, welche auf der geraden Strecke vor der Kurve gemessen wurden, bevorzugt, welche in Fig. 2 am tiefsten liegen. Dies führt zu einer unerwünschten, leichten Überschätzung des Drehungswinkels und somit auch der Drehrate des Fahrzeugs. Dies kann dadurch vermieden werden, dass auf einer geraden Strecke eine Mittelwertbildung über mehrere aufeinanderfolgende Datensätze vorgenommen wird.

Im Folgenden wird das erfindungsgemäße Verfahren mathematisch beschrieben. Die am Gyroskop gemessene Ausgangsspannung wird durch folgende Formel (1) beschrieben:

$$U = Z + S\omega + v \tag{1}$$

Dabei ist U die gemessene Ausgangsspannung am Gyroskop, Z ein Offset, S ein Skalierfaktor, ω die Winkelgeschwindigkeit des Kraftfahrzeuges und v ein offsetfreies Rauschen mit einer Varianz von σ(v)=R. Die Kalibrierwerte Z und S driften in der Zeit, können aber in genügend kleinen Zeitintervallen als konstant betrachtet werden.

Das erfindungsgemäße Verfahren besteht darin, ein geeignetes Zeitintervall zu finden, in welchem die durchschnittliche Drehrate aus Messungen der Bewegungsrichtung des absoluten Positionssensors bestimmt wird. Dabei wird das Rauschen durch die Mittelwertbildung verringert. Für eine Mittelwertbildung nach n Messungen ergibt sich der mittlere Messwert zu:

$$\bar{U} = Z + S\bar{\omega} + \bar{v} \tag{2}$$

Die Varianz des Rauschens sinkt dabei auf ein n-tel der Varianz des Ausgangsrauschens.

Andererseits wird die durchschnittliche Winkelgeschwindigkeit $\bar{\omega}$ durch Auswertung der durch GPS oder einen anderen Positionssensor berechneten Geschwindigkeiten ermittelt. Im Folgenden wird das Verfahren am Beispiel des GPS vorgestellt. Dadurch, dass das GPS in regelmäßigen Zeitintervallen die absolute Position des Fahrzeuges misst, können auch für jeden dieser Zeitpunkte Geschwindigkeitsvektoren ermittelt werden. Aus den Geschwindigkeitsvektoren folgen die Bewegungsrichtungen, welche typischerweise als Winkel zwischen Bewegungsrichtung und Nordrichtung angegeben werden. Eine zuverlässige Berechnung der Bewegungsrichtung durch GPS ist allerdings nur dann möglich, wenn eine Reihe von Bedingungen erfüllt ist. Dazu gehören eine minimale Geschwindigkeit des Fahrzeuges, nicht zu starke Beschleunigungs- oder Rotationsraten sowie eine gute Sichtbarkeit der GPS-Satelliten, also ein ausreichender Wert des DOP (dilution of precision). Der Fehler in der Messung der Bewegungsrichtung kann einfach trigonometrisch ausgedrückt werden, für nicht zu große Geschwindigkeitsmessfehler ist er jedoch einfach durch den Quotienten aus GPS-Geschwindigkeitsmessfehler und der absoluten GPS-Geschwindigkeit gegeben. Wenn ein geeignetes Zeitintervall festgelegt worden ist, in dem die durchschnittliche Drehrate bestimmt werden soll, praktischerweise ein Zeitintervall, in dem die Drehung des Fahrzeuges maximal war, so ergibt sich die mittlere Drehrate zu:

$$\bar{\omega} = \frac{1}{n}\left(H(n) - H(0)\right) \tag{3}$$

Dabei ist H(n) die Bewegungsrichtung zum Zeitpunkt $t_n$. Die Varianz der Gleichung (3) beträgt:

$$\sigma(\bar{\omega}) = \frac{1}{n^2}\left(\left(\frac{v_{\text{error}}}{v_{\text{akt}}(n)}\right)^2 + \left(\frac{v_{\text{error}}}{v_{\text{akt}}(0)}\right)^2\right) \tag{4}$$

Dabei ist $v_{\text{error}}$ der GPS-Geschwindigkeitsfehler und $v_n$ die aktuelle GPS-Geschwindigkeit. Die so bestimmte mittlere Drehrate wird für eine Bestimmung der Kalibrierparameter Z und S benutzt. Dazu wird eine Messgleichung der Form:

$$\bar{U} = \begin{pmatrix} 1 & \bar{\omega} \end{pmatrix} \begin{pmatrix} Z \\ S \end{pmatrix} + d\bar{\omega}S + \frac{1}{n}\text{Rauschen} \tag{5}$$

aufgestellt. Auf Gleichung (5) lässt sich einfach der Formulismus des Kalman-Filters anwenden. Dabei ist die Prädiktionsmatrix die Einheitsmatrix, da die Kalibrierwerte Z und S in ausreichend kurzen Zeitintervallen als konstant angenommen werden können. Auf die Kovarianzmatrix wird in jedem Schritt die Drift addiert, welche durch Temperatur oder zufällige Schwankungen der Kalibrierwerte entsteht. Alternativ zu der Formulierung in Gleichung (5) kann der Kahnan-Filter auch auf die Fehlerwerte der Kalibrierwerte dZ und dS angewandt werden. Das Messrauschen ergibt sich zu:

$$\sigma(\bar{U} - Z - S\bar{\omega}) = \frac{1}{n}R + S^2\frac{1}{n^2}\left(\left(\frac{v_{\text{error}}}{v_{\text{akt}}(n)}\right)^2 + \left(\frac{v_{\text{error}}}{v_{\text{akt}}(0)}\right)^2\right) \tag{6}$$

In den hier eingesetzten Historielängen, welche bis zu 30 Sekunden betragen, ist der Fehleranteil, der durch den zweiten Term in Gleichung (6) verursacht wird, meist dominant. Das Messrauschen wird also durch die Verwendung einer Historie quadratisch mit der Historielänge reduziert. Die Historie darf aber nicht zu lang gewählt werden, da nur in kurzen Zeiträumen Z und S als Konstante betrachtet werden können.

**Patentansprüche**

1. Verfahren zur Kalibrierung eines Gyroskops in einem Ortungsmodul in einem beweglichen System, insbesondere in einem Kraftfahrzeug, wobei das Ortungsmodul mindestens ein Gyroskop zur Messung der Drehrate des beweglichen Systems und mindestens einen absoluten Positionssensor, insbesondere einen GPS-Empfänger, umfasst, und wobei die Messungen des absoluten Positionssensors zur Bestimmung der Bewegungsrichtung des beweglichen Systems herangezogen werden,
**dadurch gekennzeichnet,**

   - **dass** eine Historie mit Datensätzen, welche die gemessenen Bewegungsrichtungen $H(t_n)$ einschließlich ihrer geschätzten Fehler und die Messwerte $U(t_n)$ des Gyroskops zu einer Reihe von Zeitpunkten $t_n$ umfassen, angelegt wird,
   - **dass** zu einem wählbaren Zeitpunkt $t_k$ ein zweiter, weiter zurückliegender Zeitpunkt $t_{k'}$ bestimmt wird,
   - **dass** die mittlere Drehrate $\omega(t_k)$ im Zeitintervall $t_k - t_{k'}$ aus der Änderung der Bewegungsrichtungen bestimmt wird und
   - **dass** die bestimmte mittlere Drehrate zur Berechnung der Kalibrierparameter des Gyroskops benutzt wird, wobei die Berechnung der Kalibrierparameter entweder direkt oder durch die Aktualisierung eines Filters, insbesondere eines Kaiman-Filters, erfolgt.

2. Verfahren nach Anspruch 1,
**dadurch gekennzeichnet, dass**
nur Zeitpunkte $t_k$ und $t_{k'}$ berücksichtigt werden, in denen der geschätzte Fehler der Bewegungsrichtungen unterhalb eines bestimmten Wertes liegt.

3. Verfahren nach einem der vorangehenden Ansprüche,
**dadurch gekennzeichnet, dass**

ein Datensatz, welcher zu einem zweiten Zeitpunkt $t_{k'}$ gehört, nach seiner Benutzung zur Berechung der Kalibrierparameter in der Historie als benutzt gekennzeichnet wird.

4. Verfahren nach einem der vorangehenden Ansprüche,
**dadurch gekennzeichnet, dass**
der zweite, weiter zurückliegende Zeitpunkt $t_k$, bestimmt wird derart, dass die Differenz $H(t_k)$ - $H(t_{k'})$ der zu den Zeitpunkten $t_k$ und $t_k$, gemessenen Bewegungsrichtungen maximal ist.

5. Verfahren nach einem der vorangehenden Ansprüche,
**dadurch gekennzeichnet, dass**
mehrere aufeinanderfolgende Datensätze in einen Datensatz zusammengefasst werden, insbesondere durch Mittelwertbildung auf im Wesentlichen geraden Fahrstrecken.

6. Verfahren nach einem der vorangehenden Ansprüche,
**dadurch gekennzeichnet, dass**
der Zeitpunkt $t_k$ und/oder der Zeitpunkt $t_k$, gewählt werden derart, dass der geschätzte Fehler aus der Änderung der Bewegungsrichtungen minimal ist.

7. Verfahren nach einem der vorangehenden Ansprüche,
**dadurch gekennzeichnet, dass**
die Datensätze, die zu einem Zeitpunkt gehören, welcher eine bestimmte Zeitlänge zurückliegt, aus der Historie gelöscht werden.

8. Verfahren nach einem der vorangehenden Ansprüche,
**dadurch gekennzeichnet, dass**
bei Stillstand des beweglichen Systems eine auf Null gesetzte mittlere Drehrate zur Bestimmung der Kalibrierparameter des Gyroskops, insbesondere des Offsets der Ausgangsspannung, benutzt wird.

Fig.1

Fig.2

Fig.3